# EUROPEAN PATENT APPLICATION

(11) **EP 2 990 947 A1**
(43) Date of publication of application: **02.03.2016**
(21) Application number: 15173268.2
(22) Date of filing: 23.06.2015
(51) Int. Cl.: G06F 11/14

(54) **METHOD AND APPARATUS FOR BACKING UP DATA AND ELECTRONIC DEVICE**

(30) Priority: 15.08.2014 CN 201410404888
(71) Applicant: Xiaomi Inc., Beijing 100085 (CN)
(72) Inventor: LIU, Tiejun, 100085 BEIJING (CN); LIU, Wen, 100085 BEIJING (CN); LI, Zheng, 100085 BEIJING (CN)
(74) Representative: Fontenelle, Sandrine

(57) **Abstract**

The present invention relates to a method and an apparatus for backing up data, and an electronic device. The method includes: receiving (102) backup data from a terminal; determining (104) account information that the terminal has logged in; and storing (106) the backup data to a path corresponding to the account information. By the technical solutions of the present invention, the backup data may be stored according to the account information, which helps to improve security and privacy of the backup data of each account, and facilitates router's management of backup data.

## Description

### TECHNICAL FIELD

The present invention relates to a field of data backup technology, and more particularly to a method and an apparatus for backing up data, and an electronic device.

### BACKGROUND

As the increasingly rich functions of mobile terminals, a user would use the mobile terminal in various occasions, such as work and life, and store all kinds of data in the mobile terminal. When the mobile terminal is lost or damaged and the like, there exists the risk of losing data, or, when the user makes manual management due to insufficient storage space of the mobile terminal, some important data may be accidentally deleted.

In the related art, based on the intelligent development and application of a router (for example, a router of a local area network or LAN), a hard disk with large capacity is configured in the router, so that the user may back up the data in the mobile terminal into the router, which not only ensures the data security, but also facilitates the user's viewing of the backup data.

However, how to promote management efficiency of the stored backup data by improving storage manner of the backup data stored in the router is not proposed in the related art.

### SUMMARY

The present invention provides a method and an apparatus for backing up data, and an electronic device, to solve the technical problem that management efficiency of the backup data stored in a router is low in the related art.

According to a first aspect of the embodiments of the present invention, there is provided a method for backing up data, including:
receiving backup data from a terminal;
determining account information that the terminal has logged in; and
storing the backup data to a path corresponding to the account information.

In a particular embodiment, the storing of the backup data to the path corresponding to the account information includes:
acquiring a device identification of the terminal; and
determining a sub-path corresponding to the device identification under the path corresponding to the account information, and storing the backup data to the sub-path corresponding to the device identification.

In another embodiment, the storing of the backup data to the path corresponding to the account information includes:
reading metadata information of the backup data;
classifying the backup data according to the metadata information; and
determining a sub-path corresponding to the classification result under the path corresponding to the account information, and storing the backup data to the sub-path corresponding to the classification result.

In another embodiment, the method further includes:
receiving a data access request sent by the terminal; and
returning information of the backup data corresponding to the account information to the terminal according to the data access request.

In another embodiment, the method further includes:
receiving a data management instruction sent by the terminal; and
managing the backup data corresponding to the account information according to the data management instruction.

According to a second aspect of the embodiments of the present invention, there is provided an apparatus for backing up data, including:
a data receiving unit configured to receive backup data from a terminal;
an account determining unit configured to determine account information that the terminal has logged in; and
a data storage unit configured to store the backup data to a path corresponding to the account information.

In a particular embodiment, the data storage unit includes:
an identification acquisition sub-unit configured to acquire a device identification of the terminal; and
a first sub-path determining sub-unit configured to determine a sub-path corresponding to the device identification under the path corresponding to the account information, and store the backup data to the sub-path corresponding to the device identification.

In another embodiment, the data storage unit includes:
an information reading sub-unit configured to read metadata information of the backup data;
a data classification sub-unit configured to classify the backup data according to the metadata information; and
a second sub-path determining sub-unit configured to determine a sub-path corresponding to a classification result under the path corresponding to the account information, and store the backup data to the sub-path corresponding to the classification result.

In another embodiment, the apparatus further includes:
a request receiving unit configured to receive a data access request sent by the terminal; and
an information return unit configured to return information of the backup data corresponding to the account information to the terminal according to the data access request.

In another embodiment, the apparatus further includes:
an instruction receiving unit configured to receive a data management instruction sent by the terminal; and
a data management unit configured to manage the backup data corresponding to the account information according to the data management instruction.

According to a third aspect of the embodiments of the present invention, there is provided an electronic device, including:
a processor; and
a memory for storing instructions executable by the processor;
wherein the processor is configured to:
receive backup data from a terminal;
determine account information that the terminal has logged in; and
store the backup data to a path corresponding to the account information.

In one particular embodiment, the steps of the method for backing up data are determined by computer program instructions.

Consequently, in a fourth aspect, there is provided a computer program which, when being executed on a processor of a device, performs any one of the above methods.

This program can use any programming language and take the form of source code, object code or a code intermediate between source code and object code, such as a partially compiled form, or any other desirable form.

The technical solutions provided by the embodiments of the present invention may include the following advantageous effects:

The present invention stores the backup data according to the account information, so that access restrictions based on authority may be set between different accounts in advance, thereby improving security and privacy of the backup data, and helping the router to improve the management efficiency to the stored backup data.

The present invention also combines the account information with the device identification to manage the stored backup data, so that a more detailed storage management to the backup data is achieved.

The present invention also classifies and stores the backup data according to the metadata information of the backup data, thereby facilitating a user's finding of the backup data, and also helping the router to improve the management efficiency of the backup data.

The present invention only also returns the information of the backup data corresponding to the account information according to the account information that the terminal has logged in, whereby it facilitates management of the backup data based on the account and backup data contents under other accounts may be also avoided to reveal, thus helping to improve the security of the backup data.

The present invention also uses an account login mechanism so that the user only views and manages the backup data corresponding to the account that has been logged in, thereby facilitating the router's management of the backup data and also helping to improve the security of the backup data.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for backing up data according to an exemplary embodiment.
Fig. 2 is an organization structure diagram illustrating a path of backing up data according to an exemplary embodiment.
Fig. 3 is an organization structure diagram illustrating another path of backing up data according to an exemplary embodiment.
Fig. 4 is a flow chart illustrating a management to backup data according to an exemplary embodiment.
Figs. 5-6 are diagrams illustrating terminal interfaces according to an exemplary embodiment.
Fig. 7 is an organization structure diagram illustrating a path of backing up data according to another exemplary embodiment.
Fig. 8 is an organization structure diagram illustrating another path of backing up data according to another exemplary embodiment.
Figs. 9-11 are diagrams illustrating terminal interfaces according to an exemplary embodiment.
Fig. 12 is a block diagram illustrating an apparatus for backing up data according to an exemplary embodiment.
Fig. 13 is a block diagram illustrating an apparatus for backing up data according to an exemplary embodiment.
Fig. 14 is a block diagram illustrating an apparatus for backing up data according to an exemplary embodiment.
Fig. 15 is a block diagram illustrating an apparatus for backing up data according to an exemplary embodiment.
Fig. 16 is a block diagram illustrating an apparatus for backing up data according to an exemplary embodiment.
Fig. 17 is a block diagram illustrating an apparatus for backing up data according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

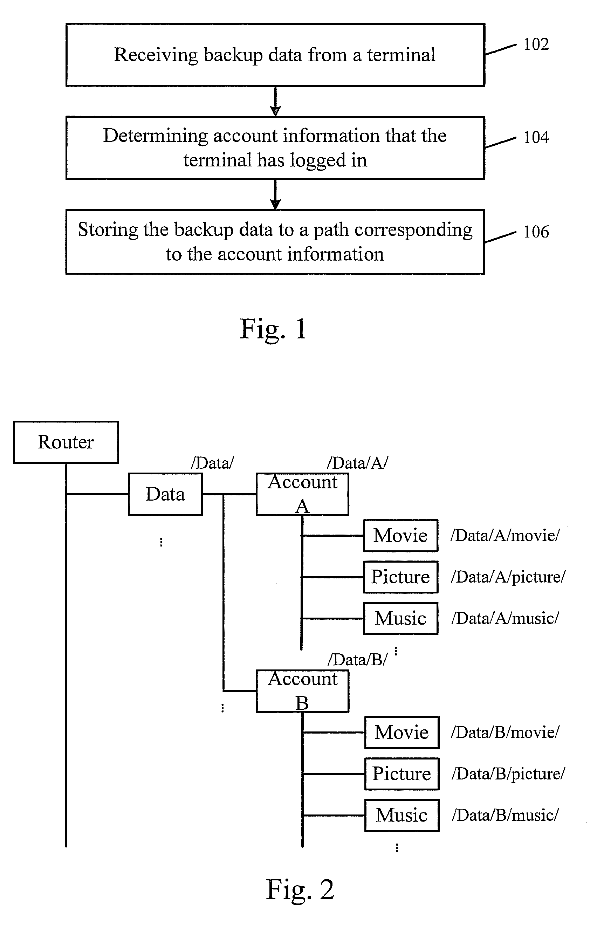

Fig. 1 is a flow chart illustrating a method for backing up data according to an exemplary embodiment. As shown in Fig. 1, the method may be used in a router, and includes the following steps.

In step 102, backup data from a terminal is received.

In this embodiment, the terminal may execute (i.e. perform) the data backup in a router after joining a LAN (Local Area Network) where the router is. In an exemplary embodiment, after negotiating with the terminal and starting a backup function, the router determines that the data received from the terminal need to be backed up. In another exemplary embodiment, the router may identify that a data packet belongs to the data which need to be backed up from the terminal according to identification in the data packet received from the terminal.

In step 104, account information that the terminal has logged in is determined.

In this embodiment, the router may inquire the account information that matches "a login account and a login password" according to a login request including the login account and the login password sent by the terminal, so as to perform account login of the terminal. As an exemplary embodiment, the router may determine the corresponding account information that the terminal has logged in according to the account identification in the corresponding data packet when receiving the backup data.

In step 106, the backup data is stored under a path corresponding to the account information.

It can be known from the above described embodiment that the present invention differentiates storage paths of backup data for different accounts in the router by account login mechanism, thereby facilitating the effective management of the backup data corresponding to the different accounts.

When the router differentiates the storage path of the corresponding backup data according to the account information, a variety of organization structures may be adopted. The following detailed description will be made.

As an exemplary embodiment, Fig. 2 illustrates an organization structure of a data storage path: a first-level storage path of "data" is created in the router, and is for example: /Data/; in the first-level storage path /Data/, taking each account as a branch, a second-level storage path corresponding to each account is created, for example, the second-level storage path corresponding to an account A is: /Data/A/, and the second-level storage path corresponding to an account B is: /Data/B/; in each second-level storage path, taking each data type as a branch, a third-level storage path corresponding to each data type is created, for example, in the second-level storage path /Data/A/ corresponding to the account A, the third-level storage path created corresponding to the data type "movie" is: /Data/A/movie/, the third-level storage path created corresponding to the data type "picture" is: /Data/A/picture/, the third-level storage path created corresponding to the data type "music" is: /Data/A/music/, and the like.

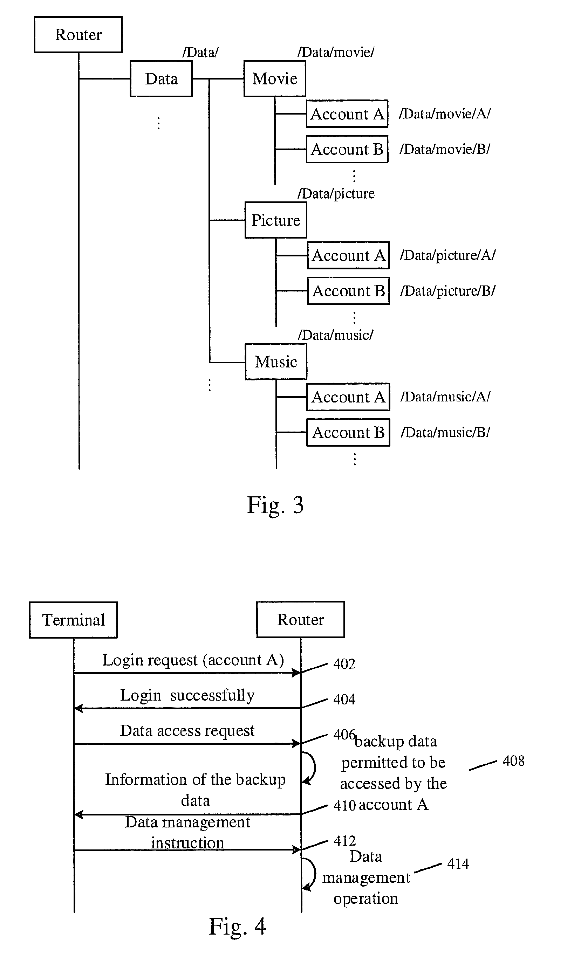

As another exemplary embodiment, Fig. 3 illustrates another organization structure of a data storage path: a first-level storage path of "data" is created in the router, and is for example: /Data/; in the first-level storage path /Data/, taking each data type as a branch, a second-level storage path corresponding to each data type is created, for example, the second-level storage path corresponding to the data type "movie" is: /Data/movie/, the second-level storage path corresponding to the data type "picture" is: /Data/picture/,and the second-level storage path corresponding to the data type "music" is: /Data/music/, and the like; in each second-level storage path, taking each account as a branch, a third-level storage path corresponding to each account is created, for example, in the second-level storage path /Data/movie/ corresponding to "movie", the third-level storage path created corresponding to an account A is: /Data/movie/A/, and the third-level storage path created corresponding to an account b is: /Data/movie/B/, and the like.

Based on the organization structure of the data storage path shown in Fig. 2 or Fig. 3, when the terminal transmits the backup data to the router, the router stores the backup data to the data storage path corresponding to the account information according to the account information that the terminal has logged in. Meanwhile, it is obvious for those skilled in the art that the organization structure of the data storage path in other forms may be applied in the technical solution of the present invention as long as the backup data corresponding to different login accounts of terminals may be stored correspondingly.

When the router adopts the organization structure of the data storage path as shown in Fig. 2 or Fig. 3, the user may execute management operations of the backup data corresponding to the login account information of the terminal through data interaction between the terminal and the router. The following detailed description will be made with reference to Fig. 4.

In step 402, suppose the terminal initiates a login request to the router by the account A.

In step 404, the router verifies the combination including a login account and a login password in the login request, and returns a message that the login is successful to the terminal after authenticating.

In step 406, the terminal sends a data access request to the router according to the account A that has logged in.

In step 408, the router determines the backup data that allows the account A to access.

In this embodiment, the user may set access authority on the backup data corresponding to the account that has logged in according to the actual needs. Therefore, the terminal may only access the backup data corresponding to the account A, or may also access the backup data having corresponding authority but corresponding to other account when logging in the account A.

In step 410, the router sends information of the backup data that allows the account A to access the backup data determined in the step 408 to the terminal.

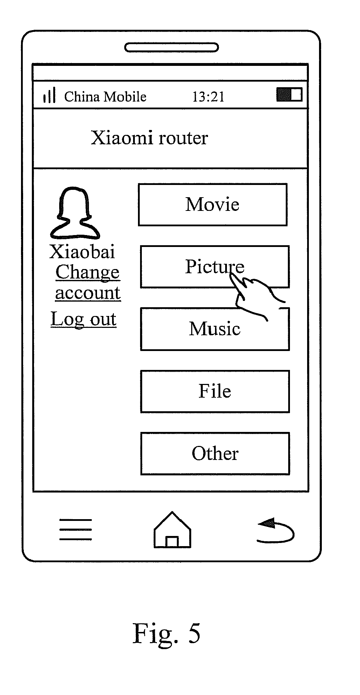

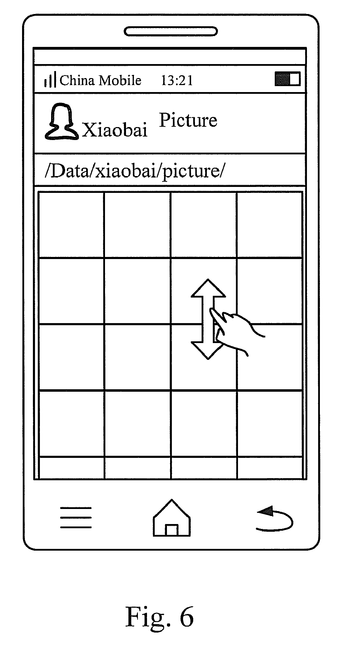

In this embodiment, as shown in Fig. 5, suppose the user logs in an account "xiaobai" through the terminal, and suppose the user may access the backup data corresponding to "xiaobai" in the router by clicking a button such as "movie", "picture", "music" and the like on a terminal interface. For example, when the user clicks a "picture" button, taking the organization structure of the data storage path shown in Fig. 2 as an example, the corresponding data storage path "/Data/xiaobai/picture/" may be entered into and shown by the interface shown in Fig. 6. A preview to a thumbnail of a picture may be performed by sliding the user's fingers up and down on a touch screen, and the corresponding picture may also be full-screen displayed by clicking the thumbnail. Certainly, the above description only takes the organization structure of the data storage path shown in Fig. 2 herein as an example, and if the organization structure of the data storage path shown in Fig. 3 is adopted, when the user clicks the "picture" button, the entered data storage path may be "/Data/picture/xiaobai/':

Further, since a plurality of devices of the same user, such as a mobile phone, a tablet PC and the like, or mobile phones of a plurality of users of the same family or the like may share the same account, the user may need the router to implement more sophisticated backup data management for each terminal device. Therefore, when the backup data from the terminal is stored to the path of the account information corresponding that the terminal has logged in, the router may further: acquire a device identification of the terminal; and determine a sub-path corresponding to the device identification in the path corresponding to the account information, and store the backup data to the sub-path corresponding to the device identification.

In this embodiment, considering the account information that the terminal has logged in and the device identification of the terminal at the same time, the organization structure corresponding to the data storage path may also be required to further expand when the router stores the backup data.

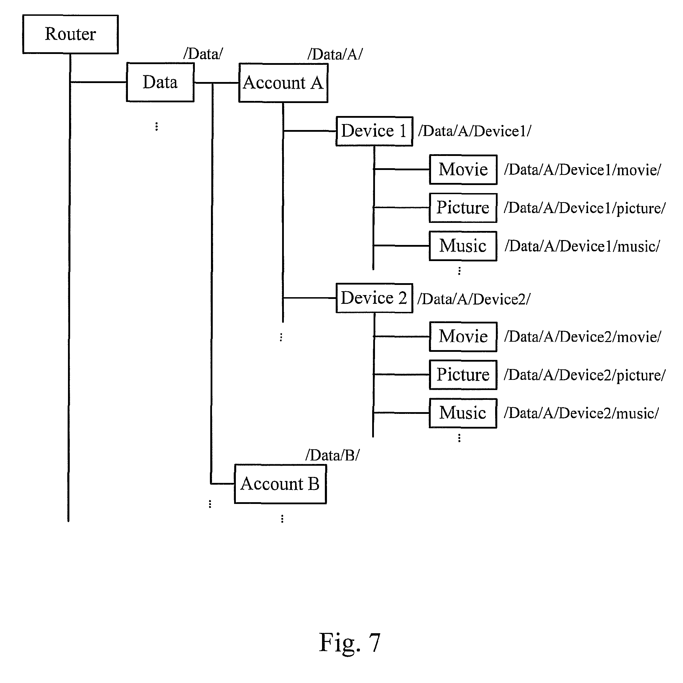

As an exemplary embodiment, the organization structure of the data storage path shown in Fig. 7 is expanded based on Fig. 2, including: under the second-level storage path corresponding to each account, the corresponding third-level storage paths are respectively created as for a plurality of terminal devices corresponding to each account, for example, suppose the account A is shared by a plurality of terminal devices such as a device 1, a device 2 and the like, under the second-level storage path /Data/A/ corresponding to the account A, the third-level storage path /Data/A/Device1/ corresponding to the device 1 and the third-level storage path /Data/A/Device2/ corresponding to the device 2 are respectively created; then, under the third-level storage path /Data/A/Device1/ corresponding to the device 1, a four-level storage path corresponding to each data type is created, for example, the four-level storage path /Data/A/Devicel/movie/ corresponding to the data type "movie", the four-level storage path /Data/A/Devicel/picture/ corresponding to the data type "picture", the four-level storage path /Data/A/Devicel/music/ corresponding to the data type "music" and the like; and similarly, under the third-level storage path corresponding to each of the other devices such as the device 2 and the like, the corresponding four-level storage path may be created.

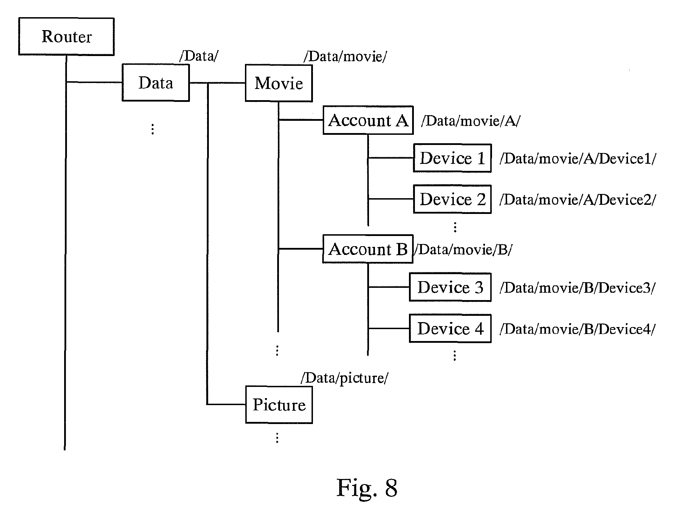

As another exemplary embodiment, the organization structure of the data storage path shown in Fig. 8 is expanded based on Fig. 3, including: in the third-level storage path corresponding to each account, the corresponding four-level storage paths are respectively created for a plurality of terminal devices corresponding to each account, for example, suppose the account A is shared by a plurality of terminal devices such as a device 1, a device 2 and the like, under the third-level storage path /Data/movie/A/ corresponding to the account A, the four-level storage path /Data/movie/A/Device1/ corresponding to the device 1 and the fourth-level storage path /Data/ movie/A/Device2/ corresponding to the device 2 are respectively created; and similarly, under the third-level storage path corresponding to each of the other accounts such as the account B and the like, the corresponding four-level storage path is created for each device using the account.

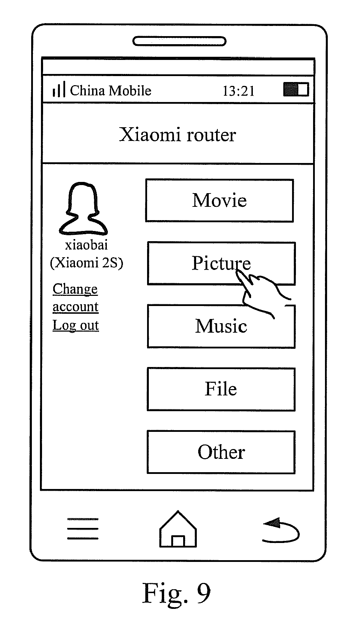

The access and the management of the backup data may be performed by the user through the interface shown in Fig. 9 based on the organization structure of the data storage path shown in Fig. 7 or Fig. 8, or through data interactive procedure shown in Fig. 4. As shown in Fig. 9, suppose the user logs in an account "xiaobai" through the terminal, the router returns the information of the backup data of "xiaomi mobile phone 2S" (i.e., "xiaomi 2S" shown in Fig. 9) corresponding to "xiaobai" to the terminal after further determining that the type of the terminal is "xiaomi mobile phone 2S", the corresponding backup data in the router may be accessed by clicking the button such as "movie", "picture", "music" and the like on the terminal interface.

According to an exemplary embodiment of the present invention, the router may also read metadata information of the backup data from the terminal, classify the backup data according to the metadata information, determine a sub-path corresponding to a classification result under the path corresponding to the account information, and store the backup data to the sub-path corresponding to the classification result.

In this embodiment, metadata of the backup data may be corresponding creation time, file size, and the like. Taking "the creation time" as an example, suppose the backup data from the terminal received by the router is: 123.jpg, the file belongs to the type of "picture", and the creation time is July 30, 2014. When the router adopts the organization structure of the data storage path shown in Fig. 7, suppose the terminal has logged in the account "xiaobai" and the terminal device is "xiaomi 25", the data storage path selected by the router is: /Data/xiaobai/xiaomi2S/picture/2014/123.jpg, or /Data/xiaobai/xiaomi2S/picture/2014/07/123.jpg, or /Data/xiaobai/xiaomi2S/picture/2014/07/30/123.jpg, and the like. When the router adopts the organization structure of the data storage path shown in Fig. 8, the data storage path selected by the router is: /Data/picture/xiaobai/xiaomi2S/2014/123.jpg, or /Data/picture/xiaobai/xiaomi2S/2014/07/123.jpg, or /Data/picture/xiaobai/xiaomi2S/2014/07/30/123.jpg, and the like.

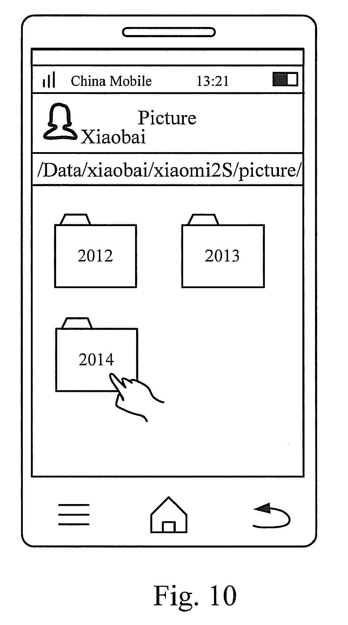

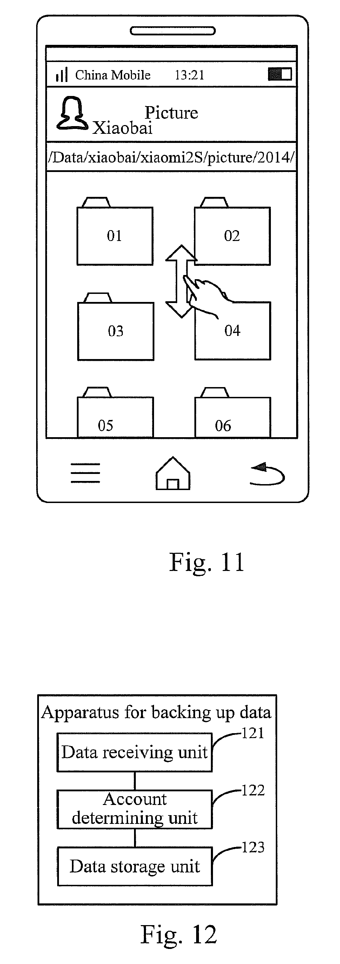

Correspondingly, the user may access the backup data "123.jpg" stored in the router in the following way: the user clicks "picture" button in the terminal interface shown in Fig. 9, and if the router adopts the organization structure of the data storage path shown in Fig. 7, the terminal enters into the data storage path "/Data/xiaobai/xiaomi2S/picture/" corresponding to Fig. 10, and displays folders corresponding to a plurality of sub-paths on the terminal interface; when the user selects a folder "2014" and enters into the sub-path "/Data/xiaobai/xiaomi2S/picture/2014/" shown in Fig. 11, the user may acquire the backup data 123.jpg in the corresponding sub-path "/Data/xiaobai/xiaomi2S/picture/2014/07/" by sliding on the terminal interface and selecting the folder "07".

Corresponding to the embodiment of the aforesaid access processing method, the present invention also provides an embodiment of an access processing apparatus.

Fig. 12 is a block diagram illustrating an apparatus for backing up data according to an exemplary embodiment. Referring to Fig. 12, the apparatus includes a data receiving unit 121, an account determining unit 122 and a data storage unit 123.

Herein, the data receiving unit 121 is configured to receive backup data from a terminal.

The account determining unit 122 is configured to determine account information that the terminal has logged in.

The data storage unit 123 is configured to store the backup data to a path corresponding to the account information.

In the above described embodiment, the backup data is stored according to the account information, so that access restrictions based on authority may be set between different accounts in advance, thereby improving security and privacy of the backup data, and helping the router to improve the management efficiency to the stored backup data.

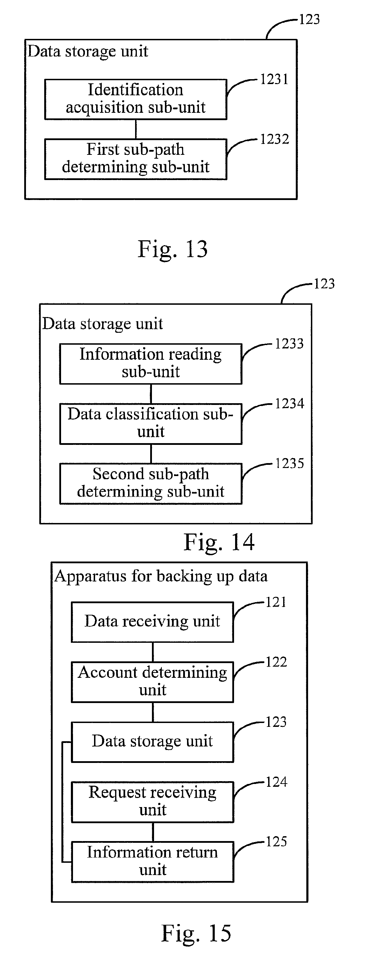

As shown in Fig. 13, Fig. 13 is a block diagram illustrating another apparatus for backing up data according to an exemplary embodiment. The embodiment is based on the aforesaid embodiment shown in Fig. 12. The data storage unit 123 may include: an identification acquisition sub-unit 1231 and a first sub-path determining sub-unit 1232.

Herein, the identification acquisition sub-unit 1231 is configured to acquire a device identification of the terminal.

The first sub-path determining sub-unit 1232 is configured to determine a sub-path corresponding to the device identification under the path corresponding to the account information, and store the backup data to the sub-path corresponding to the device identification.

In the above described embodiment, the stored backup data is managed by combining the account information with the device identification, so that a more detailed storage management to the backup data is made.

As shown in Fig. 14, Fig. 14 is a block diagram illustrating another apparatus for backing up data according to an exemplary embodiment. The embodiment is based on the aforesaid embodiment shown in Fig. 12. The data storage unit 123 may include: an information reading sub-unit 1233, a data classification sub-unit 1234 and a second sub-path determining sub-unit 1235.

Herein, the information reading sub-unit 1233 is configured to read metadata information of the backup data.

The data classification sub-unit 1234 is configured to classify the backup data according to the metadata information.

The second sub-path determining sub-unit 1235 is configured to determine a sub-path corresponding to a classification result under the path corresponding to the account information, and store the backup data to the sub-path corresponding to the classification result.

In the above described embodiment, the backup data is classified and stored according to the metadata information of the backup data, whereby facilitates a user's finding of the backup data, and also helps the router to improve the management efficiency of the backup data.

As shown in Fig. 15, Fig. 15 is a block diagram illustrating another apparatus for backing up data according to an exemplary embodiment. The embodiment is based on the aforesaid embodiment shown in Fig. 12. The apparatus for backing up data may further include: a request receiving unit 124 and an information return unit 125.

Herein, the request receiving unit 124 is configured to receive a data access request sent by the terminal.

The information return unit 125 is configured to return information of the backup data corresponding to the account information to the terminal according to the data access request.

In the above described embodiment, the information of the backup data corresponding to the account information is only returned according to the account information that the terminal has logged in, thereby facilitating management of the backup data based on the account, and backup data contents of other accounts are also avoided to reveal, which helps to improve the security of the backup data.

It should be noted that, the structure of the request receiving unit 124 and the information return unit 125 in the aforesaid apparatus embodiment shown in Fig. 15 may also be included in any one apparatus embodiment shown in the aforesaid Fig. 12 to Fig. 14, the present invention is not limited to this.

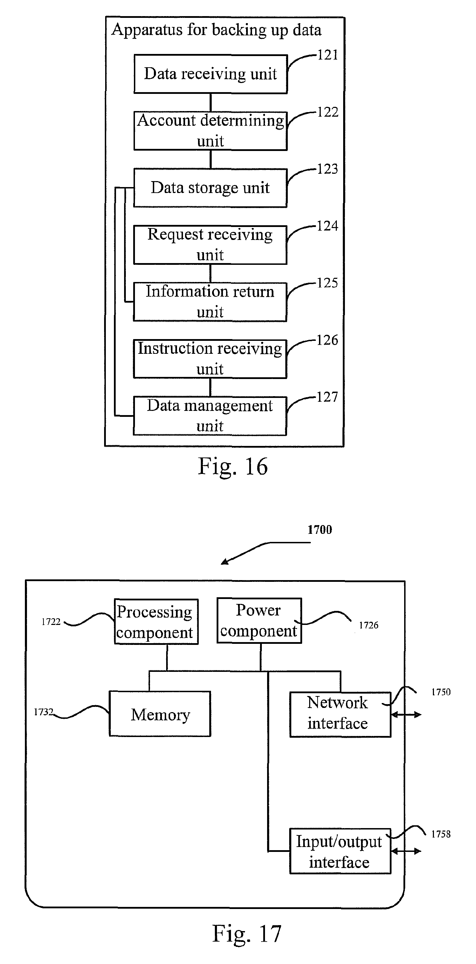

As shown in Fig. 16, Fig. 16 is a block diagram illustrating another apparatus for backing up data according to an exemplary embodiment. The embodiment is based on the aforesaid embodiment shown in Fig. 12. The apparatus for backing up data may further include: an instruction receiving unit 126 and a data management unit127.

Herein, the instruction receiving unit 126 is configured to receive a data management instruction sent by the terminal.

The data management unit 127 is configured to manage the backup data corresponding to the account information according to the data management instruction.

In the above described embodiment, also uses an account login mechanism so that the user the user may only view and manage the backup data corresponding to the account that has logged in by an account login mechanism, thereby facilitating the router's management of the backup data, and also helping to improve the security of the backup data.

It should be noted that, the structure of instruction receiving unit 126 and the data management unit 127 in the aforesaid apparatus embodiment shown in Fig. 16 may also be included in any one apparatus embodiment shown in the aforesaid Fig. 12 to Fig. 15, the present invention is not limited to this.

The detailed implementation process of the function and action of each unit in the above apparatus refers to the implementation process of corresponding steps in the above method, which is no longer described here.

Since the apparatus embodiment basically corresponds to the method embodiment, the relevant contents may refer to the descriptions in the method embodiment. The apparatus embodiment described above is only schematic, wherein the unit described as a separated component may be or may also be not physically separated, the component used as a unit display may be or may also be not a physical unit, i.e., it may be located at one place, or may also be distributed in a plurality of network units. Some or all of the modules may be selected to realize the purpose of the present invention solution according to the actual needs. Those skilled in the art may understand and implement the present invention without any creative labor.

Correspondingly, the present invention further provides an access processing apparatus, including: a processor; and a memory for storing instructions executable by the processor; wherein the processor is configured to: receive backup data from a terminal; determine account information that the terminal has logged in; and store the backup data to a path corresponding to the account information.

Correspondingly, the present invention further provides a terminal, including a memory and one or more programs, wherein the one or more programs are stored in the memory, and configured to be executable by one or more processors, wherein the one or more programs includes instructions to cause operations as follows: receiving backup data from a terminal; determining account information that the terminal has logged in; and storing the backup data to a path corresponding to the account information.

There is provided a non-transitory computer readable storage medium, wherein when instructions in the storage medium are executed by the processor of a terminal, which may execute a method for backing up data, including: receiving backup data from a terminal; determining account information that the terminal has logged in; and storing the backup data to a path corresponding to the account information.

Fig. 17 is a block diagram of an apparatus 1700 for backing up data according to an exemplary embodiment. For example, the apparatus 1700 may be provided as a server. Referring to Fig. 17, the apparatus 1700 includes a processing component 1722 that further includes one or more processors, and memory resources represented by a memory 1732 for storing instructions, such as application programs, executable by the processing component 1722. The application programs stored in memory 1732 may include one or more modules, each of which corresponds to a set of instructions. Moreover, the processing component 1722 is configured to execute instructions for performing the above described method comprising:
receiving backup data from a terminal;
determining account information that the terminal has logged in; and
storing the backup data to a path corresponding to the account information.

The apparatus 1700 may also include a power component 1726 configured to perform power management of the apparatus 1700, wired or wireless network interface(s) 1750 configured to connect the apparatus 1700 to a network, and an input/output (I/O) interface 1758. The apparatus 1700 may operate based on an operating system stored in the memory 1732, such as Windows ServerTM, Mac OS XTM, UnixTM, LinuxTM, FreeBSDTM, or the like.

After considering this description and carrying out the embodiments disclosed herein, those skilled in the art may easily anticipate other implementation aspects of the present invention. The present invention is meant to cover any variations, usage or adaptive change of these embodiments, and these variations, usage or adaptive change follow general concept of the present invention and include the common knowledge or the customary technical means in the technical field that is not disclosed in the present invention. The description and embodiments are only exemplary, and the real range and spirit of the present invention are defined by the following claims.

## Claims

1. A method for backing up data, **characterized in that** it comprises:
receiving (102) backup data from a terminal;
determining (104) account information that the terminal has logged in; and
storing (106) the backup data to a path corresponding to the account information.

2. The method according to claim 1, **characterized in that** the storing the backup data to the path corresponding to the account information comprises:
acquiring a device identification of the terminal; and
determining a sub-path corresponding to the device identification under the path corresponding to the account information, and storing the backup data to the sub-path corresponding to the device identification.

3. The method according to claim 1, **characterized in that**, the storing the backup data to the path corresponding to the account information comprises:
reading metadata information of the backup data;
classifying the backup data according to the metadata information; and
determining a sub-path corresponding to the classification result under the path corresponding to the account information, and storing the backup data to the sub-path corresponding to the classification result.

4. The method according to any of claims 1 to 3, **characterized in that** it further comprises:
receiving (406) a data access request sent from the terminal; and
returning (410) information of the backup data corresponding to the account information to the terminal according to the data access request.

5. The method according to any of claims 1 to 4, **characterized in that** it further comprises:
receiving (412) a data management instruction sent from the terminal; and
managing (414) the backup data corresponding to the account information according to the data management instruction.

6. An apparatus for backing up data, **characterized in that** it comprises:
a data receiving unit (121) configured to receive backup data from a terminal;
an account determining unit (122) configured to determine account information that the terminal has logged in; and
a data storage unit (123) configured to store the backup data to a path corresponding to the account information.

7. The apparatus according to claim 6, **characterized in that** the data storage unit comprises:
an identification acquisition sub-unit (1231) configured to acquire a device identification of the terminal; and
a first sub-path determining sub-unit (1232) configured to determine a sub-path corresponding to the device identification under the path corresponding to the account information, and store the backup data to the sub-path corresponding to the device identification.

8. The apparatus according to claim 6, **characterized in that** the data storage unit comprises:
an information reading sub-unit (1233) configured to read metadata information of the backup data;
a data classification sub-unit (1234) configured to classify the backup data according to the metadata information; and
a second sub-path determining sub-unit (1235) configured to determine a sub-path corresponding to a classification result under the path corresponding to the account information, and store the backup data to the sub-path corresponding to the classification result.

9. The apparatus according to any of claims 6 to 8, **characterized in that** it further comprises:
a request receiving unit (124) configured to receive a data access request sent by the terminal; and
an information return unit (125) configured to return information of the backup data corresponding to the account information to the terminal according to the data access request.

10. The apparatus according to any of claims 6 to 9, **characterized in that** it further comprises:
an instruction receiving unit (126) configured to receive a data management instruction sent by the terminal; and
a data management unit (127) configured to manage the backup data corresponding to the account information according to the data management instruction.

11. An electronic device, **characterized in that** it comprises:
a processor; and
a memory for storing instructions executable by the processor;
wherein the processor is configured to perform the steps of a method for backing up data according to any of claims 1 to 5.

12. A computer program stored on a computer usable medium, comprising computer-readable program means for causing a router to implement the method according to any one of claims 1 to 5.
